# EUROPEAN PATENT APPLICATION

(11) **EP 3 725 747 A1**
(43) Date of publication of application: **21.10.2020**
(21) Application number: 18888711.1
(22) Date of filing: 12.12.2018
(51) Int. Cl.: C02F 1/30

(54) **METHOD FOR REMOVING ANTIBIOTIC RESISTANCE GENE BY USING IONIZING RADIATION**

(30) Priority: 13.12.2017 CN 201711329143
(71) Applicant: Tsinghua University, Beijing 100084 (CN)
(72) Inventor: WANG, Jianlong, Beijing 100084 (CN); CHU, Libing, Beijing 100084 (CN)
(74) Representative: Barker Brettell LLP
(86) International application number: PCT/CN2018/120554
(87) International publication number: WO 2019/114749

(57) **Abstract**

Disclosed is a method for removing an antibiotic resistance gene by using ionizing radiation, wherein same comprises treating antibiotic-microorganism residues using ionizing radiation to destroy the DNA of microbial cells, thereby realizing the effective removal of the resistance gene, and same can simultaneously degrade residual antibiotics, wherein the ionizing radiation is performed using gamma rays or a high energy electron beam generated by an electron accelerator. The radiation in the method can be performed at room temperature and has broad application prospects in the environmental field.

## Description

### Technology Field

The present invention is related to the field of waste treatment, and particularly to a method for removing antibiotic resistance gene in residues from microbial antibiotic production, which is a hazardous solid waste generated from pharmaceutical industry.

### Background

China is the world's largest producer and user of antibiotics. It is estimated that China produced 248,000 tons and used 162,000 tons of antibiotics in 2013. During the fermentation production of antibiotic drugs, a large amount of solid waste, i.e., residues from microbial antibiotic production, is produced. Based on the production of 1 ton of antibiotics generates 8-10 tons of wet residues, the annual output of the residues can reach more than 2 million tons. The main components of such residues are mycelium, unused medium, metabolites from the fermentation process, residual antibiotics and antibiotic resistance genes, etc. Although the residues are rich in nutrients such as protein and polysaccharides, the remaining antibiotics and resistance genes can induce and spread antibiotic resistant bacteria, causing potential harm to the ecological environment and human health. The "List of Hazardous Wastes" revised by China in 2008 lists the residues from microbial antibiotic production as a hazardous waste. Safe disposal of the residues has become an urgent problem to be solved by antibiotics manufacturers.

The antibiotic resistance gene comprised in the residues from microbial antibiotic production is a new type of environmental pollutant, and its production is closely related to the production and use of antibiotics. Antibiotics remaining in the residues and the environment act as selective pressure for the generation of antibiotic resistant bacteria and facilitate the generation of antibiotic resistance genes. One antibiotic can induce various resistance genes. The presence of antibiotic resistance genes in the environment has increased the resistance of microorganisms to antibiotics, and even led to the generation of "superbug" carrying a variety of antibiotic resistance genes, resulting in ineffective antibiotic treatment and causing great harm to human health.

Antibiotic resistance genes have unique properties compared to other pollutants, especially to other pollutants contained in the residues from microbial antibiotic production. On one hand, antibiotic resistance gene, as biological genetic material, are different from organic pollutants such as polycyclic aromatics, pharmaceutical and personal care products (PPCPs). Once generated, the persistence of antibiotic resistance genes does not rely on the presence of antibiotics. Antibiotic resistance genes can spread through horizontal gene transfer among various pathogenic microorganisms and non-pathogenic microorganisms, and even between microorganisms with distant genetic relationships. On the other hand, the removal of antibiotic resistance genes is different from the killing of the bacteria contained in the residues from microbial antibiotic production. Studies have shown that, in the environment, antibiotic resistance genes can exist as naked DNAs independently of the bacteria, and even self-amplify under suitable conditions, so that they can still exist for a long time even the bacteria carrying them are killed.

Current technologies used for the treatment and disposal of residues from microbial antibiotic production mainly include physical and chemical methods such as incineration, landfill, composting, anaerobic digestion, microwave and alkali treatment. These methods are not satisfactory in terms of the removal of resistance genes. For example, incineration and landfill are traditional methods for treating hazardous waste. Incineration is pretty expensive because addition of fuel is required owing to the high water content and low heat value of residues from microbial antibiotic production. Landfill occupies a large amount of land, and the leachate produced by the decay and liquefaction of the residues will pollute groundwater. The efficiencies of treating the residues by composting at high temperature vary, and high temperature composting may even promote the proliferation of antibiotic resistance genes. Anaerobic digestion needs to be carried out under high temperature to reach a certain reduction in antibiotic resistance genes. Chlorine or ultraviolet disinfection processes have different effects on the removal of different antibiotic resistance genes.

There are still needs in the art for an improved method for the effective removal of antibiotic resistance genes in the hazardous waste containing antibiotic resistance genes.

### Detailed Description

In one aspect, the present application provides a method for removing antibiotic resistance gene in a waste containing the antibiotic resistance gene, comprising treating the waste by ionizing radiation.

As used herein, the term "resistance gene" or "antibiotic resistance gene" refers to those genes conferring antibiotic resistance in bacteria. The antibiotics targeted by the resistance gene can be, for example, β-lactam antibiotics such as penicillin; macrolide antibiotics such as erythromycin, erythromycin thiocyanate; aminoglycoside antibiotics such as streptomycin; polypeptide antibiotics such as vancomycin. Various resistance genes conferring resistance to different antibiotics have been identified, for example, *bla*CTX-M gene conferring β-lactam antibiotics resistance; *ere*A, *ermA*, *ermB*, *erm*F, *mef*A, *mph*B genes conferring macrolide antibiotics resistance.

As used herein, the term "waste containing antibiotic resistance gene" refers to a solid or liquid containing antibiotic resistance gene. For example, wastes containing antibiotic resistance gene include effluent from wastewater treatment plant, sludge, residues from microbial antibiotic production, etc.

Preferably, the waste containing antibiotic resistance gene is residues from microbial antibiotic production. Therefore, the present application specifically provides a method for removing antibiotic resistance gene in residues from microbial antibiotic production, comprising treating the residues by ionizing radiation.

As used herein, the term "residues from microbial antibiotic production" refers to the microorganism-containing waste produced in the production of antibiotics, which comprises antibiotic resistance genes. The residues from microbial antibiotic production mainly contains antibiotics that have not been completely extracted, other metabolites, medium components that have not been fully utilized by antibiotic-producing microorganism, and antibiotic-producing microorganism. Such residues is a hazardous waste since the antibiotics, mycelium and resistance genes contained therein cause environmental pollution.

The residues from microbial antibiotic production can be generated in a biological fermentation process for producing an antibiotic, and contain one or more resistance genes against corresponding antibiotic. For example, residues from microbial penicillin production is residues generated in a biological fermentation process for producing penicillin, and contains one or more penicillin resistance genes. In some embodiments, the residues from microbial antibiotic production is residues from microbial erythromycin production, residues from microbial erythromycin thiocyanate production, residues from microbial penicillin production, residues from microbial streptomycin production, residues from microbial cephalosporin production, residues from microbial oxytetracycline production, residues from microbial lincomycin production, or residues from microbial spiramycin production, etc. In some preferred embodiments, the residues from microbial antibiotic production is selected from one or more of residues from microbial erythromycin production, residues from microbial erythromycin thiocyanate production, and residues from microbial penicillin production. In some embodiments, the content of a resistance gene in the waste, such as residues from microbial antibiotic production, may be in the range of 1 X 10⁵ copies/g to 1 X 10¹⁰ copies/g.

The waste containing antibiotic resistance gene (such as residues from microbial antibiotic production) may be provided in the form of a solid-liquid mixture (such as wet residues from microbial antibiotic production with a water content of, for example higher than 70%, 80% or 90%), or in solid form, for example, after filtration and/or drying.

Ionizing radiation is a radiation that ionizes material, involving gamma rays or electron beams generated by electron accelerators. Gamma rays and electron beams have high energy and strong penetration. Ionizing radiation will have physical and chemical effects (such as colloidal degeneration), chemical effects (such as decomposition or oxidation of pollutants) and biological effects (such as sterilization, disinfection) on a system exposed to such radiation. Ionizing radiation has been applied in the field of water and sludge treatment to remove toxic organic pollutants. Ionizing radiation is also an effective method for removing toxic and refractory organic substances such as PPCPs. Antibiotics such as tetracycline, penicillin and sulfonamides can be efficiently degraded by ionizing radiation.

The inventors of the present application has unexpectedly found that ionizing radiation may destroy a variety of resistance genes in hazardous waste with a high removal efficiency. Without being bound by any theory, it is believed that the high-energy rays and the active radicals generated by ionizing radiation may act on antibiotic resistance genes and induce efficient chain breakage and destruction of biological functions (such as amplification and transformation), resulting in the efficient removal of antibiotic resistance gene. In addition, compared with other waste treatment technologies, ionizing radiation may have high efficiency and wide application; it may realize the simultaneous removal of various hazardous components contained in hazardous waste, such as resistance genes and antibiotics; the radiation can be carried out at ambient temperature without the need of chemical reagents or only need to add a small amount of chemical reagents, will not produce secondary pollutants, and thus may be a clean and sustainable technology.

In some embodiments, the method for removing antibiotic resistance gene in a waste containing the antibiotic resistance gene (for example, residues from microbial antibiotic production) comprises: placing the waste containing the antibiotic resistance gene near a gamma ray source or in the scanning area of high-energy electron beam for ionizing radiation treatment. Devices or equipment for performing ionizing radiation are well known in the art.

The ionizing radiation can be carried out at any suitable temperature. In some embodiments, ionizing radiation is performed at ambient temperature.

In some embodiments, the gamma ray source is Co⁶⁰ or Cs¹³⁷.

In some embodiments, the high-energy electron beam is generated by an electron accelerator.

In some embodiments, the absorbed dose is higher than 5 kGy, such as 10-50 kGy, 20-50 kGy, 30-50 kGy and the like. In some embodiments, the absorbed dose is, for example, 5, 10, 15, 20, 30, 40, 50 kGy.

The methods of the present application realize the removal of resistance gene. In the context of the present invention, the term "removal" or "removing" used when referring to resistance gene means that after treated by the method of the present application, the amount of resistance gene is reduced compared to the amount of resistance gene in the waste before treated by the method of the present application, or the resistance gene is undetectable or eliminated. The removal of the antibiotic resistance gene by the methods of the present application can be tested by any gene detection method known in the art. For example, the detection may be a qualitative detection, such as sequencing or polymerase chain reaction (PCR) and gel electrophoresis, by comparing the presence or absence of the resistance gene in a sample before and after the radiation treatment. In some preferred embodiments, using the methods of the present application for removing antibiotic resistance gene, the resistance gene is undetectable in the radiated residues from microbial antibiotic production. Alternatively, the detection may be a quantitative detection, such as fluorescent quantitative PCR, and the removal efficiency is, for example, the difference in the amount of resistance gene before and after radiation as a percentage of the amount of resistance gene before radiation. In some embodiments, the methods of the present application for removing antibiotic resistance gene in the waste can achieve a removal efficiency of at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100%. In some embodiments, the content of a resistance gene in the waste (for example, residues from microbial antibiotic production) after treated by the method of the present application may be in the range of 1 X 10⁴ copies/g to 1 X 10⁹ copies/g. In some embodiments, the methods of the present application also remove or reduce other hazardous substances (for example, antibiotics or microorganism) in the waste (for example, residues from microbial antibiotic production). For example, using the method of the present application, the removal efficiency of the antibiotics can be at least 40%, at least 60%, at least 80%, at least 90%, and so on.

In another aspect, the present application provides a waste, for example residues from microbial antibiotic production, obtained by the method of the present application in which the resistance gene has been removed.

Such wastes from which resistance gene have been removed can be reused, for example for the production of feed, fertilizer, or energy, etc. Therefore, in yet another aspect, the present application provides a method for producing feed, fertilizer, and/or energy, comprising treating the waste using the method of the present application, and using the waste for the production of feed, fertilizer and/or energy.

### Examples

The embodiments of the present application will be further described below by Examples. However, the present application is not limited to the following Examples.

### Example 1

Residues from microbial erythromycin production in the form of solid-liquid mixture (water content 93%, total suspended solids content 72 g/L, the percentage of organic solids was 80%) was detected for the content of erythromycin resistance genes and amount of active substance erythromycin A. Then the residues from microbial erythromycin production in the form of solid-liquid mixture was placed in a radiation container near the center channel of the radiation, radiation was conducted using Co⁶⁰ γ-ray (radiation activity 3.6 X 10¹⁴ Bq) at a dose rate of about 240 Gy/min. The absorbed dose was set at 5 kGy and 10 kGy by adjusting the radiation time. After the radiation was completed, the concentrations of erythromycin resistance genes and the drug active substance erythromycin A in the residues treated at different absorbed doses were detected.

High-performance liquid chromatography was used to detect the residual erythromycin in the residues. First, erythromycin was extracted from the residues by using an organic solvent, and then high-performance liquid chromatography (Agilent 1200) was used to detect the concentration of erythromycin. The chromatographic column used was an XDB-C18 reverse phase column, and the oven temperature was 35 °C. The detector was an ultraviolet detector with a detection wavelength of 215 nm; the mobile phase was acetonitrile and 0.01 mol/L dipotassium hydrogen phosphate solution with a ratio of 55/45.

Fluorescence quantitative PCR was used to analyze the erythromycin resistance genes. Specifically, GENEray DNA extraction kit was used to extract DNA, and the electrophoresis apparatus used was the Mini Pro 300V electrophoresis instrument from Major Science Corporation. The PCR analyzer used was the ABI7500 real-time fluorescence quantitative PCR analyzer from Applied Biosystems. The PCR reaction program was pre-denaturation at 95 °C for 10 min; and denaturation at 95 °C for 10s, annealing extension at 60 °C for 34 s, 95 °C for 15 s, and the number of the cycle was 40. The primer sequences used are shown in Table 1 below.

**Table 1. Primers used for the detection of erythromycin resistance genes**

| Resistance genes (f represents forward primer, r represents reverse primer) | Sequence of the primer (5-3') | Length of the amplified fragment (bp) |
|---|---|---|
| ereA f | TCTCAGGGGTAACCAGATTGA | 138 |
| ereA r | TTATACGCAAGGTTTCCAACG | |
| ermB f | AGCCATGCGTCTGACATCTA | 193 |
| ermBr | CTGTGGTATGGCGGGTAAGT | |
| mefA f | GGAGCTACCTGTCTGGATGG | 179 |
| mefA r | CAACCGCCGGACTAACAATA | |
| mphB f | GATGATCTCATCGCCTACCC | 199 |
| mphB r | CGGCATCGATACTGAGATTG | |
| ermA f | ATGTCTGCATACGGACACGG | 185 |
| ermA r | ACTTCAACTGCCGTTATCGC | |
| ermF f | CGACACAGCTTTGGTTGAAC | 309 |
| ermF r | GGACCTACCTCATAGACAAG | |

Erythromycin resistance genes *erm*B and *erm*F were detected in the initial residues, and their abundance was 1.8 ± 0.3 X 10⁹ copies/g and 8.8 ± 2.9 X 10⁶ copies/g, respectively; the amount of erythromycin was about 283 mg/kg (dry solid). After the radiation at absorbed dose of 5 kGy and 10 kGy, the abundance of *erm*B was reduced to 2.2 ± 0.2 X 10⁸ copies/g and 2.0 ± 0.1 X 10⁸ copies/g, and the removal efficiency was 87-89%; the abundance of *erm*F was reduced to 3.6 ± 1.6 X 10⁵ copies/g and 2.2 ± 1.9 x 10⁵ copies/g, the removal efficiency was 96-98%; the amount of erythromycin A was reduced to 165 mg/kg and 39 mg/kg, the removal efficiency was 42% and 86%, respectively.

### Example 2

Residues from microbial erythromycin thiocyanate production in the form of solid-liquid mixture (water content 92%, total suspended solids content 75 g/L, the percentage of organic solids was 77%) was detected for the content of erythromycin resistance genes and amount of active substance erythromycin A. Then the residues in the form of solid-liquid mixture was placed in a radiation container near the center channel of the radiation, radiation was conducted using Co⁶⁰ γ-ray (radiation activity 3.6 X 10¹⁴ Bq) at a dose rate of about 240 Gy/min. The absorbed dose was set at 10 kGy, 20 kGy and 30 kGy by adjusting the radiation time. After the radiation was completed, the content of erythromycin resistance genes and the residual active substance erythromycin A in the residues treated at different absorbed doses were detected.

Residual erythromycin A was first extracted using an organic solvent, and then detected using high-performance liquid chromatography. See Example 1 for the detailed method.

Erythromycin resistance genes were analyzed using fluorescence quantitative PCR analyzer. See Example 1 for the instrument, kit, primers, and PCR conditions.

Four erythromycin resistance genes ereA, *erm*B, *mef*A, and *mph*B were detected in the initial residues, and their average content was 2.3 X 10⁵ copies/g, 1.2 X 10⁸ copies/g, 9.0 X 10⁷ copies/g, and 5.1 X 10⁷ copies/g, respectively; the amount of erythromycin A was about 1588.9 mg/kg. After the radiation at absorbed dose of 10 kGy, the abundance of the four erythromycin resistance genes was reduced to 1.5 X 10⁵ copies/g, 6.1 X 10⁷ copies/g, 4.6 X 10⁷ copies/g, and 2.6 X 10⁷ copies/g, respectively, and the removal efficiency was 34-50%; after the radiation at absorbed dose of 20 kGy, the abundance of the four erythromycin resistance genes was reduced to 7.1 X 10⁴ copies/g, 2.8 X 10⁷ copies/g, 1.4 X 10⁷ copies/g, and 6.1 X 10⁷ copies/g, respectively, and the removal efficiency was 70-73%; after the radiation at absorbed dose of 30 kGy, the abundance of the four erythromycin resistance genes was reduced to 3.3 X 10⁴ copies/g, 1.0 X 10⁷ copies/g, 1.1 X 10⁷ copies/g, and 4.7 X 10⁶ copies/g, respectively, and the removal efficiency was 86-91 %; the amount of erythromycin A was reduced to 589.3 mg/kg, the removal efficiency was 63%.

### Example 3

Residues from microbial penicillin production in the form of solid-liquid mixture (water content 88%, total suspended solids content 116 g/L, the percentage of organic solids was 87%) was detected for the content of penicillin resistance genes and amount of penicillin. Then the residues from microbial penicillin production in the form of solid-liquid mixture was placed in a radiation container near the center channel of the radiation, radiation was conducted using Co⁶⁰ γ-ray (radiation activity 3.6 X 10¹⁴ Bq) at a dose rate of about 240 Gy/min. The absorbed dose was set at 5 kGy and 10 kGy by adjusting the radiation time. After the radiation was completed, the concentrations of penicillin resistance genes and the residual penicillin in the residues treated at different absorbed doses were qualitatively detected.

Residual penicillin was first extracted using an organic solvent, and then detected using high-performance liquid chromatography. The high-performance liquid chromatography equipment used was from Agilent (Agilent 1200), the chromatographic column used was an XDB-C18 reverse phase column, and the oven temperature was 25°C. The detector was an ultraviolet detector with a detection wavelength of 220 nm; the mobile phase was acetonitrile and 0.1 % formic acid in water with a ratio of 1:1.

Traditional PCR was used to analyze the penicillin resistance genes. The PCR analyzer used was the traditional PCR analyzer from EASTWIN ltd. The PCR reaction program was 50 °C for 2 min; 95 °C for 15 s, 94 °C for 15 s, 58 °C for 1 min, and the number of the cycle was 45. The primer sequences used for detecting penicillin resistance genes are shown in Table 2 below.

**Table 2. Primers used for the detection of penicillin resistance genes**

| Resistance genes (f represents forward primer, r represents reverse primer) | Sequence of the primer (5-3') | Length of the amplified fragment (bp) |
|---|---|---|
| *bla*CTX-M-F | ATGTGCAGYACCAGTAARGT | 593 |
| *bla*CTX-M-R | TGGGTRAARTARGTSACCAGA | |
| *bla*TEM-F | KACAATAACCCTGRTAAATGC | 936 |
| *bla*TEM-R | AGTATATATGAGTAAACTTGG | |
| *bla*SHV-F | TTTATCGGCCYTCACTCAAGG | 930 |
| *bla*SHV-R | GCTGCGGGCCGGATAACG | |

Penicillin resistance gene *bla*CTX-M was detected in the initial residues, and the amount of penicillin was about 262 mg/kg. After the radiation at absorbed dose of 10 kGy, the detection of *bla*CTX-M generated negative result; the amount of penicillin was reduced to 53 mg/kg, the removal efficiency was 80%.

### Example 4

Residues from microbial erythromycin thiocyanate production in the form of dried solid (10 mL) was detected for the content of erythromycin resistance genes. Then the residues in the form of dried solid was placed in a radiation container near the center channel of the radiation, radiation was conducted using Co⁶⁰ γ-ray (radiation activity 3.6 X 10¹⁴ Bq) at a dose rate of about 240 Gy/min. The absorbed dose was set at 30 kGy, 40 kGy and 50 kGy by adjusting the radiation time. After the radiation was completed, the content of erythromycin resistance genes in the residues treated at different absorbed doses were detected. Traditional PCR was performed to detect erythromycin resistance genes by using the method described in Example 3 and the primers in Example 1.

Four erythromycin resistance genes *ere*A, *erm*A, *mef*A, and *mph*B was detected in the initial residues. After the radiation at absorbed dose of 30 kGy, the detection of *ere*A and *erm*A generated negative result; after the radiation at absorbed dose of 50 kGy, the detection of *ere*A, *ermA*, *mef*A, and *mph*B generated negative results.

Finally, it should be noted that the above Examples are only for illustrating purpose, rather than limiting. For those of ordinary skill in the art, other modifications or changes can be made based on the above description. There is no need to exhaustively list all embodiments. The obvious modifications or changes derived from the above are still within the protection scope of the present application.

## Claims

1. A method for removing antibiotic resistance gene in a waste containing the antibiotic resistance gene, comprising treating the waste by ionizing radiation.

2. The method of claim 1, wherein the ionizing radiation is performed using gamma rays or a high-energy electron beam.

3. The method of claim 2, wherein the gamma rays are generated by the decay of radioisotope Co⁶⁰ or Cs¹³⁷.

4. The method of claim 2, wherein the high-energy electron beam is generated by an electron accelerator.

5. The method of any one of the preceding claims, wherein the waste is residues from microbial antibiotic production, preferably the residues from microbial antibiotic production is selected from one or more of residues from microbial erythromycin production, residues from microbial erythromycin thiocyanate production, and residues from microbial penicillin production.

6. The method of any one of the preceding claims, wherein the radiation absorbed dose of the ionizing radiation is greater than 5 kGy, preferably in the range of 10-50 kGy.

7. The method of any one of the preceding claims, wherein the waste is in the form of solid or solid-liquid mixture.

8. A treated waste obtained by using the method according to any one of claims 1-7.

9. A method for producing feed, fertilizer, and/or energy, comprising obtaining a treated waste using the method according to any one of claims 1-7, and using the waste for the production of feed, fertilizer and/or energy.
